# EUROPÄISCHE PATENTANMELDUNG

(11) **EP 1 176 038 A2**
(43) Veröffentlichungstag der Anmeldung: **30.01.2002**
(21) Anmeldenummer: 01118030.4
(22) Anmeldetag: 25.07.2001
(51) Int. Cl.: B60H 1/00

(54) **Verfahren zur Temperierung des Innenraums eines Kraftfahrzeugs**

(30) Priorität: 25.07.2000 DE 10036006; 25.07.2001 DE 10135381
(71) Anmelder: ROBERT BOSCH GMBH, 70442 Stuttgart (DE)
(72) Erfinder: Grob, Ferdinand, 74354 Besigheim (DE); Hoetzer, Dieter, 71701 Schwieberdingen (DE)

(57) **Zusammenfassung**

Erfindungsgemäß wird ein Verfahren zur Temperierung des Innenraumes eines Kraftfahrzeugs vorgeschlagen, wobei eine aktive Einrichtung als Zuheizer (2) in den Kühlkreislauf eines Motors (1) eingebaut wird. Als aktive Einrichtung wird insbesondere eine elektrische Maschine (2,35) vorgeschlagen, die als Generator zur Stromerzeugung ausgebildet ist. Alternativ kann auch ein Elektromotor verwendet werden. Durch geeignete Maßnahmen wird die Abwärme der elektrischen Maschine (2,35) über das Kühlwasser dem Kühlwasserkreislauf (3) zugeführt, so dass es für die Temperierung des Innenraums des Kraftfahrzeugs nutzbar ist. Die elektrische Maschine (2,35) wird durch einen Pulswechselrichter (34) gesteuert, der den Gleichrichterdioden (D) parallel geschaltete Schalter (S1, ...S6) betätigt. Durch ein entsprechendes Softwareprogramm zur Betätigung der Schalter (S1, ... S6) ist der Wirkungsgrad (31) und damit die Wärmeverluste der elektrischen Maschine (2) steuer- und regelbar.

## Beschreibung

### Stand der Technik

Die Erfindung geht aus von einem Verfahren zur Temperierung des Innenraums eines Kraftfahrzeugs, wobei dessen Temperatur über den Kühlwasserkreislauf des Motors und/oder der Wärmeenergie eines Zuheizers nach der Gattung des Hauptanspruchs gesteuert wird. Da moderne Verbrennungsmotoren, insbesondere Dieselmotoren in ihrem Wirkungsgrad so gut sind, dass beispielsweise für die Temperierung des Fahrzeugsinnenraums bei niedrigen Außentemperaturen nicht mehr genug Heizleistung erzeugt wird, werden bekanntlich in zunehmendem Maße Zuheizer verwendet, die im Kühlwasserkreislauf integriert sind, um das Kühlwasser in bestimmten Betriebszuständen des Verbrennungsmotors zusätzlich aufzuheizen. Derartige Zuheizer werden entweder elektrisch betrieben oder verbrennen Kraftstoff, um die entsprechende Wärme zu erzeugen. Dies hat jedoch den Nachteil, dass der Zuheizer zusätzlich in den im allgemeinen engen Motorraum eines Kraftfahrzeugs eingebaut werden muß und damit nicht unerhebliche Kosten verursacht. Andererseits werden an das elektrische Bordnetz steigende Anforderungen nach immer mehr elektrischer Leistung gestellt, die die heutigen Generatoren nicht mehr in allen Betriebszuständen liefern können. Um diesen Anforderungen gerecht zu werden, werden stärkere Generatoren verwendet, die auch als Starterersatz sowie motorisch verwendbar sind. Diese Maschinen verlangen jedoch ebenfalls viel Einbauraum und müssen energetisch beherrscht werden.

### Vorteile der Erfindung

Das erfindungsgemäße Verfahren zur Temperierung des Innenraums eines Kraftfahrzeugs mit den kennzeichnenden Merkmalen des Hauptanspruchs hat demgegenüber den Vorteil, dass auf einen Zuheizer herkömmlicher Art praktisch verzichtet werden kann und dennoch das Kühlwasser zusätzlich aufgeheizt werden kann. Als besonders vorteilhaft wird angesehen, dass durch die Nutzung der Abwärme der aktiven Einrichtung einerseits die notwenige Wärmeenergie gewonnen und andererseits dadurch die Einrichtung thermisch entlastet wird, so dass sie bezüglich ihres Leistungsvermögens besser optimiert werden kann und infolge dessen möglicherweise auch eine kleinere Bauart gewählt werden kann.

Durch die in den abhängigen Ansprüchen aufgeführten Maßnahmen sind vorteilhafte Weiterbildungen und Verbesserungen des im Hauptanspruch angegebenen Verfahrens möglich. Als besonders vorteilhaft wird dabei angesehen, dass die aktive Einrichtung eine im Motorraum angeordnete elektrische Maschine ist, deren Wärmeverluste an das Kühlsystem abgegeben werden. Insbesondere bei einem Generator, der aufgrund seines Wirkungsgrades bei hoher Belastung eine entsprechende Abwärme erzeugt, kann diese zum Aufheizen des Kühlwassers sinnvoll genutzt werden. Gleichzeitig ergibt sich der Vorteil, dass durch die verbesserte Kühlung die elektrische Maschine als Generator oder Antriebsmotor in der Lage sind, aufgrund der verbesserten Kühleigenschaften eine höhere Leistung abzugeben.

Durch die verbesserte Kühlung kann insbesondere die in Zukunft geforderte hohe elektrische Leistung für die vielen im Fahrzeug angeordneten Verbraucher erzeugt werden. Dies ist besonders dann wichtig, wenn das geplante 42 Volt Bordnetz zum Tragen kommt.

Eine besonders günstige Lösung wird auch darin gesehen, durch Steuerung des Wirkungsgrades der elektrischen Maschine die Wärmeverluste und damit den Gewinn an Heizwärme für den Innenraum des Kraftfahrzeugs zu steuern. Das kann vorteilhaft, beispielsweise durch Bestromung der Feldwicklungen des nicht erregten Generators oder durch Kurzschließen der Feldwicklungen erfolgen.

Eine bevorzugte und vorteilhafte Ausführungsform des erfindungsgemäßen Verfahrens sieht vor, dass die Änderung des Wirkungsgrades der elektrischen Maschine in Form eines Regelkreise erfolgt. Dieser Regelkreis passt den aktuellen Ist-Wirkungsgrad der Maschine auf einen gewünschten Soll-Wirkungsgrad an.

In einer bevorzugten Ausführungsform des beanspruchten Verfahrens wird der Ist-Wirkungsgrad aus detektierten Messgrößen der elektrischen Maschine und des Kühlkreislauf berechnet.

Die Realisierung der vorgeschlagenen Maßnahmen wird vorteilhaft mit einem Softwareprogramm bewirkt, das insbesondere Bestandteil eines bestehenden Steuerprogramms ist.

Eine alternative, vorteilhafte Lösung wird auch darin gesehen, als Zuheizer Teile des Auspuffs zu verwenden, wobei insbesondere die dem Katalysator nachgeschalteten Auspuffteile zur Wärmerückgewinnung verwendbar sind.

### Zeichnung

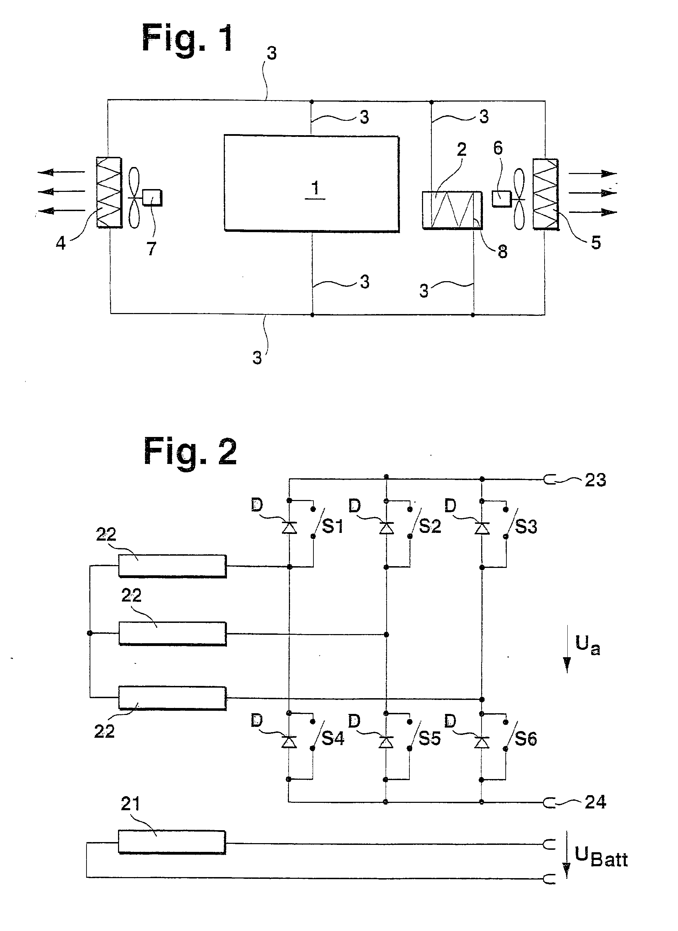

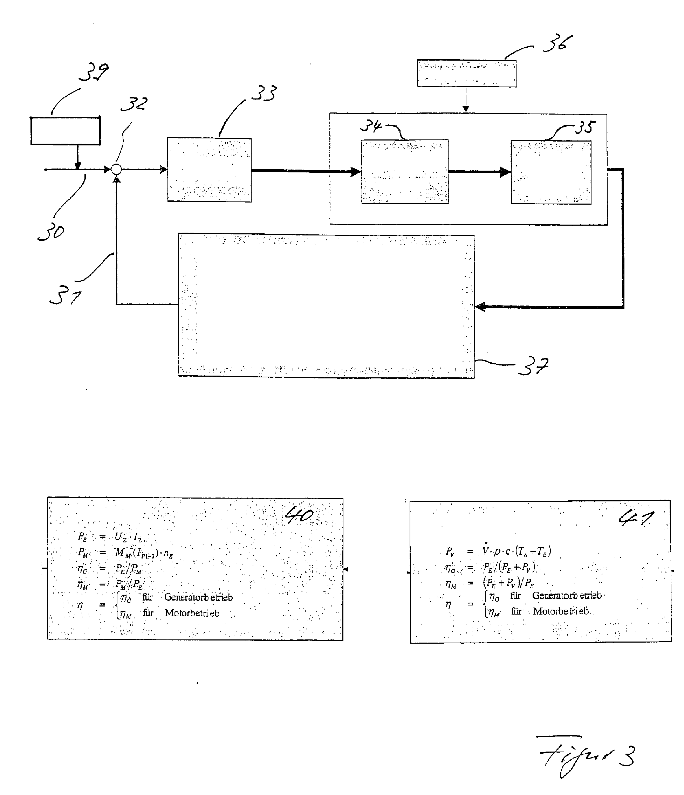

Ein Ausführungsbeispiel der Erfindung ist in der Zeichnung dargestellt und in der nachfolgenden Beschreibung näher erläutert. Figur 1 zeigt in schematischer Darstellung ein Blockschaltbild eines Kühlkreislaufes mit der Wärmegewinnung Figur 2 zeigt einen Stromlaufplan eines Generators. In Figur 3 ist ein Regelkreis für den Wirkungsgrad einer elektrischen Maschine dargestellt. Figur 3 zeigt zudem Gleichungen zur rechnerischen Bestimmung des aktuellen Ist-Wirkungsgerades der elektrischen Maschine nach Figur 2.

### Beschreibung des Ausführungsbeispiels

Figur 1 zeigt in schematischer Darstellung ein Blockschaltbild eines Kühlkreislaufes eines Verbrennungsmotors 1 (Motors) mit einem Kühlkreislauf für die Wärmegewinnung. In der Figur wurden aus Übersichtlichkeitsgründen nur die wesentlichen Elemente des Kühlsystems dargestellt. Ventile, Pumpen, Temperatursensoren Regler und Steuerelemente wurden weggelassen. Diese Elemente sind per se bekannt. Bei dem Kühlsystem ist der Motor 1 über Rohrleitungen oder Schläuche 3 zunächst mit einem Kühler 4 verbunden, der die überschüssige Motorwärme (Abwärme) an die Außenluft abgibt. Die Wärmeabgabe wird von einem Lüfter 7 unterstützt, der nach Bedarf eingeschaltet werden kann. Der Kühlwasserkreislauf wird unterstützt durch eine Wasserpumpe (nicht eingezeichnet), um den Wirkungsgrad des Kühlsystems zu verbessern. Des Weiteren ist der Motor 1 über die Leitungen 3 mit einem Wärmetauscher 5 verbunden, der in der Regel im Fahrzeuginnenraum angeordnet ist und die Wärme an den Fahrgastraum abgibt. Die Wärmeabgabe wird ebenfalls von einem Gebläse 6 unterstützt, das nach Belieben vom Fahrer oder automatisch schaltbar ist. Vom Grundsatz her ist diese Anordnung bereits bekannt. Um die Heizleistung des Wärmetauschers 5 verbessern zu können, wird jedoch vorgeschlagen, einen Zuheizer 2 mit einer aktiven Einrichtung zu verwenden, wie sie beispielsweise durch einen Generator oder Elektromotor mit größerer Leistung gegeben ist. In alternativer Ausgestaltung ist jedoch auch vorsehbar, Teile des warmen Auspuffrohres, insbesondere, wenn sie dem Katalysator nachgeschaltet sind, zur Wärmegewinnung zu nutzen.

Gemäß Figur 1 wird als Zuheizer 2 beispielsweise ein Generator vorgeschlagen, wie er üblicherweise für das 14-Volt- oder 42-Voltnetz verwendet wird. Derartige elektrische Maschinen werden beispielsweise als Klauenpol- oder Asynchronmaschinen gebaut und werden über einen Pulswechselrichter gesteuert. Geeignete Ausführungsformen sind auch als Starterersatz (Dynostarter) oder für den Booster-Betrieb verwendbar. Insbesondere wenn diese elektrischen Maschinen eine höhere Leistung aufweisen, reicht eine übliche Luftkühlung nicht mehr aus. In diesem Fall wird vorgeschlagen, eine Wasserkühlung 8 zu verwenden und diese über die Rohrleitungen 3 mit dem Kühlsystem zu verbinden. Die Wasserkühlung 8 kann beispielsweise als Kühlschlange um die aktive Einrichtung gewickkelt sein. Alternative Ausführungsformen können mit angeformten Kühlkörpern oder -kammern ausgebildet sein. Auch eine vollständige Durchflutung ist denkbar.

Auch die Kühlwasserleitungen 3 für die aktive Einrichtung können zur Steuerung mit entsprechenden Ventilen versehen sein und werden so gestaltet, dass die Wärmeabgabe der elektrischen Maschine steuerbar ist. Auf diese Weise wird die mechanische Energie des Motors 1 zum Antrieb der elektrischen Maschine nicht nur zur Stromerzeugung genutzt, sondern auch, um mit Hilfe deren Abwärme den Innenraum des Kraftfahrzeugs zu temperieren.

Figur 2 zeigt einen Stromlaufplan eines Generators, der als Zuheizer 2 verwendbar und von einem Pulswechselrichter entsprechend steuerbar ist. Der Generator weist eine Erregerwicklung 21 auf, die von der Bordspannung, im allgemeinen 14 oder 42 Volt gespeist wird. Der Erregerstrom wird dabei von einem Regler geregelt, der je nach Leistungsbedarf ein entsprechendes magnetisches Rotationsfeld erzeugt, das in den Feldwicklungen 22 einen drehzahlabhängigen Strom beziehungsweise eine Spannung erzeugt. Da die Feldspulen 22 einen Drehstrom erzeugen, wird dieser von sechs Gleichrichterdioden D gleichgerichtet, so dass sich am Ausgang (Klemmen 23, 24) die Ausgangsspannung Ua einstellt, wie sie beispielsweise für das 42-Volt-Bordnetz benötigt wird. Zu den Dioden D sind 6 Schalter S1, S2, S3, S4, S5 und S6 parallel geschaltet. Diese Schalter sind als Halbleiterschalter, vorzugsweise in MOS-FET-Technologie ausgebildet und werden von einer nicht dargestellten Steuerung betätigt, je nachdem, welcher Betriebszustand des Generators eingestellt werden soll. Ergänzend wird noch erwähnt, dass die Feldspulen 22 in Sternschaltung geschaltet sind. Natürlich sind auch anderen bekannte Ausführungsformen analog verwendbar.

Im Folgenden wird die Funktionsweise der Anordnung näher erläutert.

Entsprechend dem Grundgedanken der Erfindung wird einerseits die mechanische Energie, die über den Motor 1 als Antriebsmotor für die elektrische Maschine eingebracht wird, durch vorteilhafte Ansteuerung über die Feldspulen 22 mehr oder weniger stark in Wärme umgewandelt. Andererseits wird elektrische Energie aus dem Bordnetz zur Erwärmung der elektrischen Maschine und damit des Kühlwassers genutzt.

Im generatorischen Betrieb der elektrischen Maschine kann auch durch Verschlechterung des Wirkungsgrades die Erzeugung von Wärmeenergie relativ zur Erzeugung von elektrischer Energie erhöht werden. Um den Wirkungsgrad der Anordnung der elektrischen Maschine inklusive deren Ansteuerung zu beeinflussen ist ein Regelkreis vorgesehen, der die Stellgrößen Schalter S1 bis S6 und den Erregerstrom in gewünschter Weise verstellt. Um den vorgebbaren, gewünschten Soll-Wirkungsgrad einzustellen, ist eine Erfassung des momentanen Ist-Wirkungsgrades erforderlich. Da dieser nicht direkt gemessen werden kann, muss der aktuelle Wirkungsgrad (Ist-Wirkungsgrad) aus vorhandenen Messgrößen, die beispielswesie über Sensoren an ein Steuergerät gemeldet werden, berechnet werden.

Figur 3 zeigt schematisch einen solchen Regelkreis zur Einregelung des aktuellen Ist-Wirkungsgrades auf einen gewünschten Soll-Wirkungsgrad.

Ein Vergleichsglied 32 vergleicht den aktuell vorliegenden Ist-Wirkungsgrad 31 mit einem vorgegebenen, gewünschten Soll-Wirkungsgrad 30 und steuert in Abhängigkeit von der Differenz dieser beiden Größen einen Regler 33 an, der die möglichen Stellgrößen Schalter S1 bis S2 und den Erregerstrom einer elektrischen Maschine 35 in geeigneter Weise verstellt. Diese Größen werden an einen Pulswechselrichter 34 weitergegeben. Der Pulswechselrichter 34 steuert dann entsprechend dieser Vorgaben die elektrische Maschine 35, die im vorliegenden Ausführungsbeispiel ein elektrischer Generator für ein Kraftfahrzeug ist. Der Pulswechselrichter 34 und die elektrische Maschine 35 werden von einer, beziehungsweise auch mehreren Engergiequelle 36 des Fahrzeugs mit der benötigten Energie versehen.

Beispielsweise in einem, in Figur 3 nicht dargestellten, Steuergerät wird aus verschiedenen Messgrößen, die durch im Kühlkreislauf 3 angebrachten Sensoren gewonnen werden, der Ist-Wirkungsgrad 31 der elektrischen Maschine 35 ermittelt. Dies kann beispielsweise mittels eines Computerprogramms, das im Steuergerät abgelegt ist, geschehen. Die Bestimmung des Ist-Wirkungsgrades 31 ist in Figur 3 schematisch durch einen Umsetzer 37 dargestellt, der den ermittelten Ist-Wirkungsgrad 31 an das Vergleichsglied 32 weitergibt. Der Umsetzer 37 verarbeitet Messwerte, die über verschiedene Sensoren 38 detektiert werden. Das Signal des Soll-Wirkungsgrades 30 kann über einen Taktgeber 39 mit einer vorgebbaren Taktfrequenz beaufschlagt werden, die es ermöglicht, zwischen einem Normalen Betrieb mit hohem Wirkungsgrad und einem Betrieb mit geringem, elektrischen Wirkungsgrad beliebig oft hin- und herzuschalten. Dies ist speziell für den Fall von Vorteil, wenn der Soll-Wirkungsgrad über einen Kurzschlussbetrieb der Feldwicklungen 22 herabgesetzt wird, der Leistungsbedarf des Bordnetztes aber nicht eingeschränkt werden soll.

Für die Bestimmung des Ist-Wirkungsgerads im Umsetzer 37 ergeben sich eine Vielzahl von Möglichkeiten, von denen hier beispielhaft nur zwei Möglichkeiten vorgestellt werden sollen.

So lässt sich der Ist-Wirkungsgrad 31 aus den elektrischen Größen und der Drehzahl der Maschine 35 sowie deren Ansteuerung gewinnen. Dazu wird beispielsweise die Zwischenkreisspannung, der Zwischenkreisstrom, der Phasenstrom und die mechanische Drehzahl der elektrischen Maschine über Sensoren 38 detektiert. Die elektrische Leistung ist hierbei eine einfach zu berechnende Größe. Die mechanische Leistung P ergibt sich aus der Multiplikation der Drehzahl n mit dem Moment M, wobei das Moment M aus dem gegebenen Zusammenhang zwischen Phasenströmen und abgegebenen beziehungsweise aufgenommenen Moment berechnet oder aber auch aus einen gemessenen und beispielsweise im Steuergerät hinterlegten Kennfeld entnommen werden kann. Es ergeben sich die in den Gleichungen 40 dargestellten Wirkungsgrade η für den Generator- beziehungsweise den Motorbetrieb.

Alternativerweise lässt sich der Ist-Wirkungsgrad 31 aus den elektrischen Größen, dem Volumenstrom des Kühlmediums sowie der Eingangstemperatur T_{E} und Ausgangstemperatur T_{A} des Kühlmittels beim Durchströmen der elektrischen Maschine 35 ermitteln. Dazu wird die an das Kühlmittel abgegebene Wärmemenge direkt zur Berechnung des Wirkungsgrades herangezogen. Der Wirkungsgrad η lässt sich dann aus der Zwischenkreisspannung, dem Zwischenkreisstrom, der Eingangssowie der Ausgangstemperatur des Kühlwassers und dem Volumenstrom Ů des Kühlwassers bestimmen. Der Volumenstrom seinerseits kann auch über eine Messung des Druckabfalls zwischen dem Eingang und dem Ausgang des Kühlwassers berechnet werden. Es ergeben sich die in den Gleichungen 41 dargestellten Wirkungsgrade η für den Generatorbeziehungsweise den Motorbetrieb der elektrischen Maschine 35.

Zur Änderung des aktuellen Wirkungsgerads 31 der elektrischen Maschine 35 werden durch den Regler 33 die Stellgrößen Schalter S1 bis S2 und den Erregerstrom der elektrischen Maschine 35 verändert. Insbesondere ist vorgesehen, bei nicht erregtem Rotorfeld nur durch Bestromung der Feldspulen 22 aus dem Bordnetz die elektrische Energie direkt in Wärme umzuwandeln und dann ins Kühlwasser einzuspeisen.

Ein weiterer Zuheizer 2 oder separate Heizelemente im Kühlwasser sind bei diesem erfindungsgemäßen Verfahren in der Regel nicht mehr erforderlich. Dadurch werden vorteilhaft Kosten eingespart. Selbst in solchen Fällen, in denen die Abwärme der elektrischen Maschine nicht ausreicht, genügt ein kleinerer elektrischer Zuheizer, der entsprechend kostengünstig einbaubar ist. Die Steuerung der elektrischen Maschine wird vorteilhaft mit einer Erweiterung eines Softwareprogramms erreicht, das ohnehin für die Steuerung des Pulswechselrichters benötigt wird.

In einer Ausführungsform ist vorgesehen, eine Klauenpolmaschine als Generator zu verwenden, die von dem Pulswechselrichter gesteuert wird. Klauenpolmaschinen gibt es in unterschiedlichen Bauarten, wobei die Erregerwicklung 21 mitbewegt oder feststehend sein kann. Sie baut über Klauen ein Rotorfeld auf. Gespeist wird die Erregerwicklung 21 von dem 14-Volt- oder 42-Volt-Netz mit der Spannung U_{Batt}.

Die Feldspulen 22 sind beispielsweise in Sternschaltung verdrahtet. Üblicherweise wird bei heutigen 12-Volt-Generatoren der Rotor mit der Erregerwicklung 21 bewegt, so dass in den feststehenden Feldspulen 22 eine Wechselspannung induziert wird, die über die Dioden D gleichgerichtet wird. Der Generator kann vorteilhaft an seinen Ausgangsklemmen 23, 24 eine gewünschte Spannung, beispielsweise Ua = 42 V für das Bordnetz liefern. Dies wird durch eine geeignete Ansteuerung der Schalter S1, ...S6 erreicht. Diese Schalter sind in der Regel als Halbleiterschalter insbesondere in MOS-FET-Technologie ausgeführt. Die Schalter S1,...S6 werden in entsprechender Weise von dem Pulswechselrichter gesteuert.

Bei normalen Generatorbetrieb ist die Ansteuerung der Schalter S1, ...S6 für eine maximale Abgabe an elektrischer Leistung ausgelegt, so dass der Generator mit einem optimalen Wirkungsgrad arbeitet. Erfindungsgemäß ist jedoch vorgesehen, die Schalter S1 bis S3 so anzusteuern, dass dieser Wirkungsgrad gezielt verschlechtert werden kann, indem entweder bei gleicher elektrischer Leistungsabgabe die mechanische Leistungsaufnahme erhöht wird. Alternativ kann bei gleicher mechanischer Leistungsaufnahme die elektrische Leistungsabgabe reduziert werden. Eine Möglichkeit, dies zu erreichen, ist beispielsweise das Kurzschließen der Feldspulen 22 mittels der genannten Schalter S1 bis S3. In diesem Fall wird keine elektrische Leistung an das Bordnetz abgegeben. Damit dennoch der Leistungsbedarf des Bordnetzes befriedigt werden kann, kann zwischen einem normalen und einem Kurzschlußbetrieb beliebig oft hin- und hergeschaltet werden.

Bei der Programmierung der oben genannten Funktionen ist darauf zu achten, dass eine maximal zulässige Temperatur in den Windungen der Spulen 21, 22 nicht überschritten wird. Dazu kann einerseits das Erregerfeld der Erregerwicklung 21 verändert werden. Andererseits ist auch das Tastverhältnis zwischen dem optimalen und verschlechterten Wirkungsgrad während des Betriebes änderbar.

Eine weitere Möglichkeit der Verschlechterung des Wirkungsgrades kann durch eine Übererregung der Erregerwicklung 21 erreicht werden.

In alternativer Ausgestaltung der Erfindung ist vorgesehen, dass die Feldspulen 22 der elektrischen Maschine als Widerstandsheizung verwendet werden. Dazu werden beispielsweise die Schalter S1, S5 und S6 geschlossen und die Erregerwicklung 21 nicht erregt, so dass sich kein Rotorfeld ausbilden kann. In diesem Fall wirken die beiden äußeren Feldspulen 22 als Heizelemente. Natürlich sind auch andere Schalterkombinationen vorsehbar.

Wird in weiterer Ausgestaltung der Erfindung eine Asynchronmaschine verwendet, dann kann deren Wirkungsgrad dadurch verschlechtert werden, dass der felderzeugende Strom ständig maximal bleibt.

Das erfindungsgemäße Verfahren ist nicht auf die Verwendung in den, im Ausführungsbeispiel dargestellten Vorrichtungen begrenzt.

## Patentansprüche

1. Verfahren zur Temperierung eines Innenraumes eines Kraftfahrzeugs, wobei dessen Temperatur über den Kühlwasserkreislauf des Motors (1) und/oder der Wärmeenergie eines Zuheizers (2,35) gesteuert wird, **dadurch gekennzeichnet, dass** der Zuheizer (2,35) eine aktive Einrichtung des Kraftfahrzeugs ist, die mit dem Kühlkreislauf des Motors (1) derart verbunden ist, dass deren Abwärme zumindest teilweise an das Kühlwasser abgegeben wird und dass diese Abwärme vorzugsweise zur Temperierung des Fahrzeuginnenraumes nutzbar ist.

2. Verfahren nach Anspruch 1, **dadurch gekennzeichnet, dass** die aktive Einrichtung (2,35) eine im Motorraum angeordnete elektrische Maschine (35) ist, deren Wärmeverluste an das Kühlsystem abgegeben werden.

3. Verfahren nach Anspruch 2, **dadurch gekennzeichnet, dass** die elektrische Maschine (2,35) ein Generator zur Stromerzeugung ist.

4. Verfahren nach Anspruch 2 oder 3, **dadurch gekennzeichnet, dass** die elektrische Maschine (2,35) ein Antriebsmotor ist.

5. Verfahren nach einem der vorhergehenden Ansprüche, **dadurch gekennzeichnet, dass** durch die verbesserte Kühlleistung der elektrischen Maschine (2,35) deren Leistungsgrenze in Abhängigkeit von den Wärmeverlusten anpassbar ist.

6. Verfahren nach einem der vorhergehenden Ansprüche, **dadurch gekennzeichnet, dass** die Höhe der Wärmeverluste der elektrischen Maschine (2,35) durch Änderung deren Wirkungsgrades (31) steuerbar ist.

7. Verfahren nach einem der vorhergehenden Ansprüche, **dadurch gekennzeichnet, dass** die Änderung des Wirkungsgrades der elektrischen Maschine (2,35) in einem Regelkreis erfolgt, der den Ist-Wirkungsgrad (31) auf einen vorgebbaren Soll-Wirkungsgrad (30) einregelt.

8. Verfahren nach einem der vorhergehenden Ansprüche, **dadurch gekennzeichnet, dass** der Ist-Wirkungsgrad (31) durch Bestromung der Feldspulen (22) der elektrischen Maschinen (2,35) steuerbar und/oder regelbar ist.

9. Verfahren nach einem der vorhergehenden Ansprüche, **dadurch gekennzeichnet, dass** der Ist-Wirkungsgrad (31) der elektrischen Maschine (2,35) durch Kurzschließen der Feldspulen (22) steuerbar und/oder regelbar ist.

10. Verfahren nach einem der Ansprüche 6 bis 9, **dadurch gekennzeichnet, dass** der Ist-Wirkungsgrad (31) der elektrischen Maschine (2,35) durch Übererregung einer Erregerwicklung (21) steuerbar und/oder regelbar.

11. Verfahren nach einem der Ansprüche 6 bis 10, **dadurch gekennzeichnet, dass** zwischen einem Normalbetrieb der elektrischen Maschine (2,35) und einem Betrieb mit reduziertem Wirkungsgrad mit von einem Taktregler (39) vorgebbarer Taktfrequenz gewechselt wird.

12. Verfahren nach einem der vorhergehenden Ansprüche, **dadurch gekennzeichnet, dass** die Wärmeverluste der elektrischen Maschine (2,35), und insbesondere deren Ist-Wirkungsgrad (31) mittels eines Softwareprogrammes steuerbar und/oder regelbar sind.

13. Verfahren nach Anspruch 8, **dadurch gekennzeichnet, dass** das Softwareprogramm Bestandteil eines Steuer- und Regelprogramms ist, vorzugsweise zur Steuerung eines Pulswechselrichters (34).

14. Verfahren nach Anspruch 1, **dadurch gekennzeichnet, dass** als Zuheizer (2) ein Teil eines Auspuffs verwendbar ist.
